# EUROPÄISCHE PATENTANMELDUNG

(11) **EP 2 133 635 A2**
(43) Veröffentlichungstag der Anmeldung: **16.12.2009**
(21) Anmeldenummer: 09007128.3
(22) Anmeldetag: 28.05.2009
(51) Int. Cl.: F24J 2/20, F24J 2/46

(54) **Solarflachkollektor und dessen Herstellung**

(30) Priorität: 11.06.2008 DE 102008027797
(71) Anmelder: Robert Bosch GmbH, 70442 Stuttgart (DE)
(72) Erfinder: Clement, Uwe, 73114 Schlat (DE); von Garnier, Kai, 73779 Deizisau (DE); Zucchini, Marco, 70839 Gerlingen (DE)

(57) **Zusammenfassung**

Die Erfindung betrifft einen Solarkollektor und ein Solarkollektorgehäuse (2), umfassend ein oberes Gehäuseteil (1a) und ein unteres Gehäuseteil (1b), wobei die Gehäuseteile (1) über Stege (4) miteinander verbunden sind, sodass zwischen den beiden Gehäuseteilen (1) ein durchströmbarer Hohlraum (3) gebildet ist, sowie ein Herstellungsverfahren für ein Solarkollektorgehäuse (2) und die Verwendung eines vorzugsweise standfesten Klebstoffs zur Herstellung eines Solarkollektorgehäuses (2).

Es ist eine Aufgabe der Erfindung, einen der Erfindung, einen Solarkollektor sowie ein Solarkollektorgehäuse und ein Verfahren zur Herstellung eines Solarkollektorgehäuses zu schaffen, wobei die Nachteile gemäß dem Stand der Technik überwunden sind. Insbesondere ist es eine Aufgabe der Erfindung, ein Solarkollektorgehäuse, einen Solarkollektor und ein Herstellungsverfahren zu schaffen, bei welchen ein einfacher Aufbau, ein geringer Materialaufwand und geringere Fertigungszeiten erforderlich sind. Gekennzeichnet ist die Erfindung dadurch, dass mindestens einer der Stege (4) als vorzugsweise standfester Klebstoff ausgebildet ist.

## Beschreibung

Die Erfindung betrifft ein Solarkollektorgehäuse, insbesondere für einen vollflächig durchströmbaren Solarflachkollektor, nach dem Oberbegriff des Patentanspruches 1.

Weiter betrifft die Erfindung einen Solarkollektor, insbesondere einen vollflächig durchströmbaren Solarflachkollektor, nach Patentanspruch 7.

Zudem betrifft die Erfindung ein Verfahren zur Herstellung eines Solarkollektorgehäuses, insbesondere für einen vollflächig durchströmbaren Solarflachkollektor, nach dem Oberbegriff des Patentanspruchs 8.

Nicht zuletzt betrifft die Erfindung die Verwendung eines vorzugsweise standfesten Klebstoffs gemäß dem Patentanspruch 10.

Solarkollektoren, insbesondere Solarflachkollektoren sind allgemein bekannt. Derartige Solarkollektoren umfassen ein flächiges Solarkollektorgehäuse mit einem darin angeordneten Absorber.

Der Absorber ist als ein von einem Solarfluid durchströmbarer Fluidkanal oder entsprechend als Fluidkanalsystem ausgebildet. Das Fluidkanalsystem umfasst in einer Ausgestaltung ein Rohr oder mehrere Rohre, kann aber auch den Hohlraum, der durch zumindest teilweise beabstandete Gehäuseteile gebildet wird, insbesondere mit eingebrachten Kanalwandungen, wie zum Beispiel Rippen, Stege, Rohre etc., umfassen. Insbesondere geht der Trend bei Solarkollektoren hin zu vollflächig durchströmten Absorbern, insbesondere bei Verwendung von Werkstoffen mit relativ niedrigen Wärmeleitfähigkeiten, wie zum Beispiel bei Kunststoff. Denn bei nicht vollflächig durchströmbaren Absorbern kann es aufgrund der geringen Wärmeleitfähigkeit des Kunststoffes bei herkömmlichen Rohr- bzw. Rippen- oder Stegausführungen zu hohen Temperaturgradienten kommen, die zur Überhitzung und damit zu einer Zerstörung führen können. Aus diesem Grunde sind bei Verwendung von Kunststoffen flächig durchströmbare Absorber erforderlich.

Bei flächigen Absorberkonzepten ist zur effizienten Energieumwandlung eine möglichst gleichmäßige Durchströmung des Absorbers bei vorgegebenem Nennvolumenstrom des Solarfluids erforderlich, insbesondere in Hinblick auf einen optimalen Wirkungsgrad. Hierzu sind strömungstechnisch optimierte Fluidkanäle zu realisieren, welche unter Umständen recht komplex gestaltet sein müssen. Zudem sollen Absorber relativ einfach und kostengünstig ausgebildet sein, um Solarthermiesysteme wirtschaftlich vorteilhaft zu gestalten. Bei bekannten Systemen erfolgt eine Herstellung von Absorbern und Gehäusen mittels relativ aufwendigen Kanalstrukturen und kosten- und zeitintensiven Ultraschall- und/oder Laserschweißprozessen.

Der Erfindung liegt die Aufgabe zugrunde, ein Solarkollektor sowie ein Solarkollektorgehäuse und ein Verfahren zur Herstellung eines Solarkollektorgehäuses und damit eines Solarkollektors zu schaffen, der die Nachteile gemäß dem Stand der Technik überwindet. Insbesondere ist es eine Aufgabe der Erfindung, ein Solarkollektorgehäuse, einen Solarkollektor und ein Herstellungsverfahren zu schaffen, bei welchen ein einfacher Aufbau, ein geringer Materialaufwand und geringere Fertigungszeiten erforderlich sind.

Erfindungsgemäß wird dies durch die Gegenstände mit den Merkmalen des Patentanspruches 1, des Patentanspruchs 7, des Patentanspruchs 8 und des Patentanspruchs 10 gelöst. Vorteilhafte Weiterbildungen sind den Unteransprüchen zu entnehmen.

Das erfindungsgemäße Solarkollektorgehäuse ist **dadurch gekennzeichnet, dass** bei dem Solarkollektorgehäuse, insbesondere für einen vollflächig durchströmbaren Solarflachkollektor, umfassend ein oberes Gehäuseteil, und ein unteres Gehäuseteil, wobei die Gehäuseteile über Stege miteinander verbunden sind, sodass zwischen den beiden Gehäuseteilen ein durchströmbarer Hohlraum gebildet ist, vorgesehen ist, dass mindestens einer der Stege als standfester Klebstoff ausgebildet ist, um die Gehäuseteile miteinander abdichtend stoffschlüssig unter Bildung eines Wandungsteils zu verbinden. Das Solarkollektorgehäuse umfasst zwei zu verbindende Gehäuseteile, die bei Verbindung einen Hohlraum definieren, welcher im Wesentlichen den Absorber bildet. Der Absorber ist ein Leitungssystem, welches von einem Solarfluid durchströmbar ist. Das Leitungssystem umfasst einen Fluidkanal oder mehrere Fluidkanäle. Das Solarkollektorgehäuse und zumindest ein Teil des Absorbers sind entsprechend integriert, das heißt einteilig ausgebildet. Die Gehäuseteile können als im Wesentlichen plattenförmige Grundkörper wie Platten oder Folien ausgebildet sein, die vorzugsweise aus Kunststoff hergestellt sind. Um einen Hohlraum zwischen den Gehäuseteilen zu schaffen, sind Stege als Abstandshalter und/oder als Kanalwandungen vorgesehen. Die Stege sind sandwichartig zwischen den Gehäuseteilen angeordnet. Um gleichzeitig eine sichere Verbindung zwischen den Gehäuseteilen zu realisieren und einen Hohlraum zu schaffen, sind die Stege zumindest teilweise aus einem vorzugsweise standfesten Klebstoff gebildet. Unter einem standfesten Klebstoff versteht man einen Klebstoff, der nach seiner Dosierung, das heißt in einem nicht ausgehärteten Zustand, nicht oder nur unwesentlich fließt. Die Dosierung kann so erfolgen, dass ein Klebstoffsteg mit bis zu mehreren Millimetern Höhe gebildet werden kann. Diese Höhe bleibt bis zu einer gewissen Krafteinwirkung im Wesentlichen konstant. Erst bei Überschreiten einer zulässigen Krafteinwirkung weicht der Klebstoff in seinem ungehärteten Zustand aus. Nach Aushärten des Klebstoffs ist die zulässige Kraftbelastung entsprechend höher. Während des Zusammenbaus der Gehäuseteile fungiert der Klebstoff sowohl als Verbindungsmittel als auch als Abstandshalter.

In einer Ausführungsform des erfindungsgemäßen Solarkollektorgehäuses ist vorgesehen, dass die Stege mindestens einen Randsteg umfassen, um die Gehäuseteile und somit den Hohlraum randseitig abdichtend zu begrenzen. Es kann ein Randsteg vorgesehen sein, oder auch mehrere. Der Randsteg kann zum Beispiel umlaufend entlang des Verbindungsbereichs der Gehäuseteile vorgesehen sein. Durch den Randsteg wird der Absorber nach außen begrenzt.

Bei einer weiteren Ausführungsform der vorliegenden Erfindung ist vorgesehen, dass der Randsteg teilweise integriert mit mindestens einem Gehäuseteil ausgebildet ist. So kann das Gehäuseteil beispielsweise als tiefgezogenes Gehäuseteil mit einem entsprechenden vorstehenden Randbereich ausgebildet sein. Die Randstege können auch anders an den Gehäuseteilen geformt sein, beispielsweise mittels Biegen, Anschweißen oder dergleichen. Der Randsteg kann einteilig ausgebildet sein, oder auch mehrteilig, zum Beispiel teilweise integriert an das obere Gehäuseteil und teilweise integriert an das untere Gehäuseteil. Mehrere Stegteile können über einen entsprechenden Klebstoff miteinander verbunden sein.

In noch einer weiteren Ausführungsform der vorliegenden Erfindung ist vorgesehen, dass die Stege Kanalstege umfassen, die in dem von den Randstegen begrenzten Hohlraum angeordnet sind und Fluidkanäle bilden. Diese Stege werden auch als Zwischenstege bezeichnet. Über die Kanalstege lässt sich die Struktur der Fluidkanäle festlegen oder definieren.

Ein Ausführungsbeispiel des Solarkollektorgehäuses sieht vor, dass vorzugsweise der standfeste Klebstoff Abstandshaltemittel aufweist, um auch unter hoher Krafteinwirkung einen geeigneten Abstand zwischen den Gehäuseteilen zu gewährleisten. Die Abstandshaltemittel können herkömmliche Abstandshalter, beispielsweise aus Kunststoff oder einem anderen Material, in beliebiger Form, als Steg, Zylinder und dergleichen, umfassen. Die Abstandshaltemittel können separat oder integriert ausgebildet sein. Abstandshaltemittel können beispielsweise in den Klebstoff integrierte Füllstoffe oder Partikel sein, welche insbesondere die Druckstandfestigkeit des Klebstoffs erhöhen.

Ein weiteres Ausführungsbeispiel sieht vor, dass die Gehäuseteile im Wesentlichen als korrespondierende Platten und/oder Folien ausgebildet sind. Diese können dünn ausgebildet sein, da die vorhandenen Stege den Gehäuseteilen eine entsprechende Stabilität verleihen, sodass die Gehäuseteile, beispielsweise die Folien, nicht durchhängen und die Fluidkanäle beeinträchtigen.

Der erfindungsgemäße Solarkollektor, insbesondere ein vollflächig durchströmbarer Solarflachkollektor, ist **dadurch gekennzeichnet, dass** mindestens ein erfindungsgemäßes Solarkollektorgehäuse vorgesehen ist. Es können auch mehrere Solarkollektorgehäuse oder Solarkollektorgehäuse mit entsprechend aus vorzugsweise standfestem Klebstoff hergestellten Stegen vorgesehen sein.

Insbesondere sieht eine Ausführungsform des erfindungsgemäßen Solarkollektors vor, dass mindestens eine der mit einem Solarfluid kontaktierbaren Oberflächen solarfluiddicht ausgebildet ist.

Das erfindungsgemäße Verfahren zur Herstellung eines Solarkollektorgehäuses, insbesondere für einen vollflächig durchströmbaren Solarflachkollektor, umfassend die Schritte: sandwichartiges Anbringen von Stegen zwischen einem oberen und einem unteren Gehäuseteil und Verbinden zumindest der Gehäuseteile unter Bildung eines Hohlraums, der zumindest teilweise durch die Stege begrenzt ist, ist **dadurch gekennzeichnet, dass** das Anbringen von Stegen mittels Auftragen eines vorzugsweise standfesten Klebstoffs erfolgt, um die Gehäuseteile miteinander abdichtend stoffschlüssig unter Bildung eines Wandungsteils zu verbinden. Nach Bereitstellen zweier Gehäuseteile wird der standfeste Klebstoff entsprechend der gewünschten Fluidkanalstruktur auf einem Gehäuseteil oder auf beiden Gehäuseteilen dosiert. Die Gehäuseteile werden entsprechend zusammengefügt, sodass zwischen diesen die Fluidkanalstruktur realisiert wird. Anschließend wird der Klebstoff ausgehärtet.

Ein Ausführungsbeispiel des erfindungsgemäßen Verfahrens sieht vor, dass der Schritt Auftragen umfasst: Auftragen des Klebstoffs mittels eines Druck- und/oder Maskenprozesses, um geeignete reproduzierbare Strömungsmittel zu bilden. Zusätzlich können Abstandshaltemittel aufgebracht werden. Ein Abdichten von solarfluidkontaktierenden Oberflächen kann entsprechend vorgesehen sein.

Erfindungsgemäß ist die Verwendung eines standfesten Klebstoffs zum beabstandeten Verbinden von mindestens zwei Gehäuseteilen zu einem Solarkollektorgehäuse vorgesehen. Hierbei wird zugleich eine Fluidkanalstruktur durch den Klebstoff gebildet. Der Klebstoff wird somit als Bindemittel für die Gehäuseteile als auch für die Ausbildung von Wandungen verwendet.

Mit dem erfindungsgemäßen Solarkollektorgehäuse, dem erfindungsgemäßen Solarkollektor und dem erfindungsgemäßen Herstellverfahren sowie der Verwendung des Klebstoffs zur Bildung von Stegen werden insbesondere die folgenden Vorteile realisiert:

Eine hohe Funktionsintegration durch die Verwendung eines vorzugsweise standfesten Klebstoffs, denn dabei fungiert der Klebstoff als Seitenwand der Fluidkanäle, als Verbindungselement zwischen den Absorberplatten oder Absorberfolien (Gehäuseteilen) und als Stromführungselement für eine gleichmäßige Absorberdurchströmung. Zudem wird durch den Einsatz des standfesten Klebstoffs eine flexible Absorbergestaltung ermöglicht, da sich auf einfache Weise Fluidkanäle mit unterschiedlicher Höhe insbesondere im Ein- und Ausströmbereich des Absorbers realisieren lassen. Nicht zuletzt lassen sich beliebige, komplexe Kanallayoutänderungen kostengünstig und schnell umsetzen.

Die Zeichnung stellt ein Ausführungsbeispiel der Erfindung dar und zeigt in der Figur:
- Fig. 1: schematisch in einer perspektivischen Ansicht zwei plattenförmige Gehäuseteile eines Solarkollektorgehäuses in einem 3D-Raum,
- Fig. 2: schematisch einen Querschnitt durch das Solarkollektorgehäuse in der Ebene x-z,
- Fig. 3: schematisch einen Querschnitt durch das Solarkollektorgehäuse in der Ebene y-z und
- Fig. 4: schematisch einen Querschnitt durch das Solarkollektorgehäuse in der Ebene x-y.

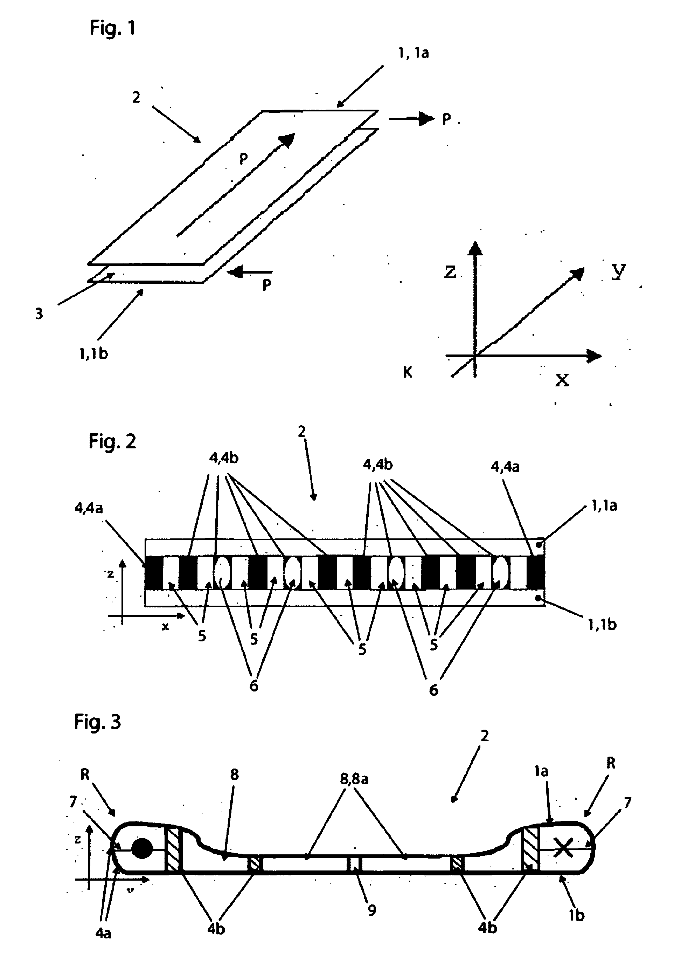

Fig. 1 zeigt schematisch in einer Perspektivansicht zwei plattenförmige Gehäuseteile 1 - ein oberes Gehäuseteil 1 a und ein unteres Gehäuseteil 1 b - eines Solarkollektorgehäuses 2 in einem dreidimensionalen Raum. Zur Vereinfachung der Darstellung und Beschreibung der nachfolgenden Schnittebenen ist ein karthesisches Koordinatensystem K mit drei zueinander orthogonalen Achsen x, y, z dargestellt. Die beiden Gehäuseteile 1 sind korrespondierend zueinander ausgebildet, das heißt, die beiden Gehäuseteile 1 weisen in etwa die gleichen Abmaße zumindest in x- Richtung und y-Richtung auf. In z-Richtung sind die beiden Gehäuseteile 1 beabstandet zueinander angeordnet. Dies erfolgt durch hier nicht dargestellte Stege. Durch die beabstandet zueinander angeordneten Gehäuseteile 1 ist zwischen den Gehäuseteilen 1 ein Hohlraum 3 gebildet, durch welchen ein Solarfluid strömen kann. Durch die Pfeile P ist eine Strömungsrichtung des Solarfluids durch einen mittels des Solarkollektorgehäuses definierten Absorber dargestellt. Das Solarfluid strömt vollflächig durch den Hohlraum.

Fig. 2 zeigt schematisch einen Querschnitt durch das Solarkollektorgehäuse 2 in der Ebene x-z. Neben den Gehäuseteilen 1 sind zudem Stege 4 dargestellt, welche zwischen den Gehäuseteilen 1 sandwichartig angeordnet sind und welche das obere Gehäuseteil 1a mit dem unteren Gehäuseteil 1 b stoffschlüssig verbinden. Gleichzeitig dienen die Stege 4 als Abstandshalter. Die Stege 4 umfassen Randstege 4a, welche an einem Randbereich der Gehäuseteile 1 zwischen diesen angeordnet sind und den Hohlraum 3 seitlich nach außen, das heißt in x-Richtung und/oder in x-Richtung, zumindest teilweise abgrenzen (mit Ausnahme des Zulaufs und des Ablaufs). Die Randstege 4a können integriert mit den Gehäuseteilen 1 ausgebildet sein, zum Beispiel als tiefgezogener Rand, gebogener Rand und dergleichen. Wie in Figur 2 dargestellt, sind vorliegend die Randstege 4a separat als Einheit ausgebildet. Neben den Randstegen 4a umfassen die Stege 4 auch Kanalstege 4b, welche in dem von den Randstegen 4a umgrenzten Bereich zwischen den Gehäuseteilen 1 angeordnet sind. Diese Kanalstege 4b verhindern zum einen ein Durchhängen der flächigen, plattenförmigen Gehäuseteile 1. Zum anderen bilden diese Kanalstege 4 eine Kanalstruktur, indem diese die Wandungen für Fluidkanäle 5 bilden. Die Stege 4 können beliebig ausgebildet sein, das heißt, die Stege können hinsichtlich ihrer Wandstärke, ihrer Höhe, ihrer Breite, ihres Verlaufs, ihres Abstands zueinander und dergleichen variieren, um eine geeignete Kanalstruktur zu realisieren. Um eine ausreichende Stabilität zu gewährleisten und/oder um einen konstanten Abstand der Gehäuseteile zueinander zu gewährleisten, können Abstandsmittel 6 vorgesehen sein. Die Abstandsmittel 6 können beliebige Abstandshalter (hier nicht dargestellt) umfassen. Vorliegend sind die Abstandsmittel 6 als Füllstoff oder Partikel ausgebildet, welche in den entsprechenden Steg 4 integriert ausgebildet sind.

Die Stege 4 selbst sind in der hier abgebildeten Figur sämtlich aus einem standfesten Klebstoff hergestellt. Dieser standfeste Klebstoff weist während des Dosierens, das heißt in einem nicht ausgehärteten Zustand eine ausreichend hohe Druckfestigkeit oder Stabilität auf, sodass dieser bei einem Aufeinander-Anordnen der Gehäuseteile, auch unter einer zulässigen Druckbelastung, nicht oder nur unwesentlich fließt. Auf diese Weise kann der Klebstoff unter Beibehaltung eines vorgebbaren Abstandes die Gehäuseteile miteinander stoffschlüssig verbinden und eine Kanalstruktur ausbilden. Neben den Stegen aus standfestem Klebstoff können auch Stege aus anderen Materialien vorgesehen sein.

Fig. 3 zeigt schematisch einen Querschnitt durch das Solarkollektorgehäuse 2 in der Ebene y-z. Die Gehäuseteile 1 sind hier im Randbereich R etwas gewölbt oder wulstartig ausgebildet, da hier ein Einlauf- bzw. ein Auslaufbereich ausgebildet ist. Der Einlaufbereich ist durch einen Punkt symbolisiert, welcher die Strömungsrichtung in die Zeichenebene hinein darstellt (linke Seite). Der Auslaufbereich ist durch ein Kreuz oder X dargestellt, welches die Strömungsrichtung aus der Zeichenebene heraus darstellt (rechte Seite). In dem Einlauf- bzw. dem Auslaufbereich ist die Verbindungsstelle 7 zwischen dem oberen Gehäuseteil 1a und dem unteren Gehäuseteil 1b zu erkennen. Die Verbindungsstelle 7 wird über geeignete Verbindungsmittel gebildet, beispielsweise mittels Klebstoff, einer Schweißnaht oder dergleichen. Der Randsteg 4a ist hier mehrteilig als integriertes Bestandteil des jeweiligen Gehäuseteils 1 ausgebildet, beispielsweise als tiefgezogener Rand. Zudem sind zwei als Fluidkanalwandung 8 ausgebildete Kanalstege 4b dargestellt, wobei eine erste Fluidkanalwandung 8a eine Unterbrechung 9 aufweist, sodass ein Solarfluid nicht nur entlang der Fluidkanalwandung 8 strömen kann, sondern auch quer dazu durch die Unterbrechung 9. Der Querschnitt der Stege 4b ist im Wesentlichen rechteckig (schraffierter Bereich), kann jedoch beliebig ausgebildet sein.

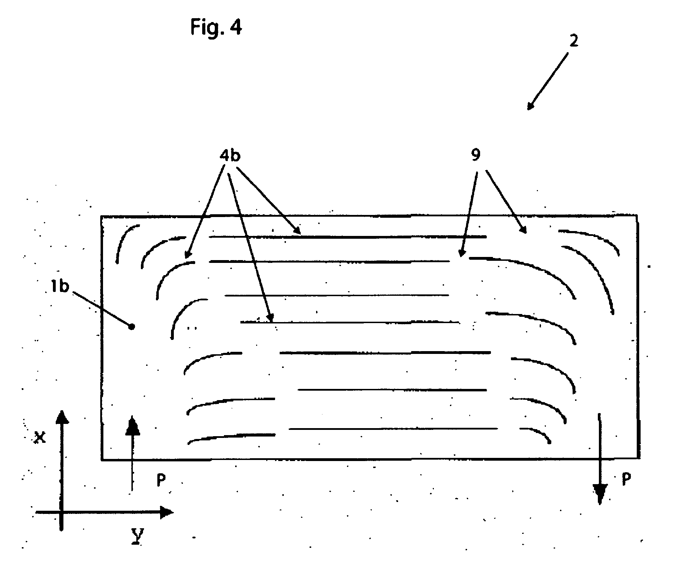

Fig. 4 zeigt schematisch einen Querschnitt durch das Solarkollektorgehäuse 2 in der Ebene x-y. Dargestellt ist das untere Gehäuseteil 1b mit den darauf angeordneten Kanalstegen 4b. Die Kanalstege 4b sind verteilt über das untere Gehäuseteil 1b angeordnet und bilden eine Kanalstruktur mit mehreren geraden und/oder gekrümmten Kanälen. Die Stege 4b sind hierzu länglich - gerade und/oder gebogen- ausgebildet. Zum Teil sind die einzelnen Stege 4b durch Unterbrechungen 9 unterbrochen, sodass Solarfluid nicht nur entlang der Fluidkanalwandung 8 strömen kann, sondern auch quer dazu. Auf diese Weise entsteht eine Art Strömungsfeld oder auch Flowfield, welches für die vollflächige Durchströmung des Solarfluids optimiert ist. Die Pfeile P deuten hierbei die Strömungsrichtung an.

Durch die Erfindung ist ein kostengünstiges Herstellverfahren (Klebeverfahren) für flächig durchströmte Absorbergeometrien bereitgestellt. Der eingesetzte standfeste Klebstoff wird dabei verwendet zur Verbindung der Absorberplatten/-Folien, zur Abdichtung des Solarmediums gegenüber der Umgebung und als Element zur homogenen Strömungsführung des Solarmediums innerhalb des Absorbers. Der flächige Absorber besteht im Wesentlichen aus zwei Platten oder Folien, welche vorzugsweise aus Kunststoff hergestellt sind. Die Zwischen- oder Kanalstege sind aus einem standfesten Klebstoff, welcher zusätzlich mit Partikeln gefüllt sein kann, welche die Funktion eines Abstandhalters übernehmen. Die Klebstoffstege sind so hoch, dass sich Fluidkanäle bilden, durch die das Solarmedium bzw. -fluid fließen kann. Für eine homogene Durchströmung des Absorbers werden die Ein- und Ausströmbereiche in der Höhe (z-Richtung) derart variiert, dass durch alle Kanäle der gleiche Fluidmassenstrom fließt. Die unterschiedlichen Steghöhen können ebenfalls mit standfesten Klebstoffen hergestellt werden. In x-y-Richtung werden die Klebstoffstege so ausgeführt, dass sie eine homogene Durchströmung des Absorbers bei gleichzeitig niedrigem Druckverlust fördern. Beliebige Kanallayouts sind realisierbar. Der Klebstoff wird in einem Druck- /Maskenprozess auf die untere Absorberplatte aufgetragen. Anschließend werden Anschlussteile (z. B. Spritzgussteil), Halterungen etc. eingelegt und im gleichen Klebeprozess mitverarbeitet. Zum Schluss wird die obere Absorberplatte eingesetzt, sodass der komplette Aufbau in einem Schritt ausgehärtet werden kann. Die Absorber- oder Gehäuseteilplatten treffen sich typischerweise in der Mitte des Gehäuses in z-Richtung, an der sie auch verklebt werden. Die Ränder der Platten müssen nicht unbedingt rund sein. Anstatt Platten kann man sich auch flexible Folien verwenden, die man dann rund verlegen kann.

Standfester Klebstoff kann bei der Montage gepresst werden ohne wegzufließen, damit die nötige Dichte und Druckstabilität des Kollektors erreicht wird. Es müssen dann nicht in oder an jedem Steg in festgelegten Abständen entlang der Steglänge den Montagedruck aufnehmende Abstandhalter zur Festlegung des Abstandes der Gehäuseplatten angeordnet sein. Standfeste Klebstoffe fließen nach der Dosierung nicht weg, auch nicht bei einem Erhitzen. Dadurch kann ein Klebstoffsteg mit mehreren Millimetern Höhe auf die Gehäuseteile aufgebracht werden. Wenn der Klebstoff in einem unausgehärteten Zustand zu hoch belastet wird, fließt dieser entsprechend weg. Dementsprechend können auch um einen gleichmäßigen Abstand zu erreichen, Abstandshalter eingebaut werden oder wie beschrieben Füllstoffe im Klebstoff integriert werden, welche sich nicht zusammendrücken lassen.

Für den Druck-/Maskenprozess, mit dem der Klebstoff aufgetragen wird, benötigt man eine entsprechend ausgebildete Schablone, welche auf die untere Absorberplatte aufgelegt wird. Die Schablone ist an den Stellen ausgespart, an denen am Ende Kanäle bzw. Stege ausgebildet sein sollen. Über die Schablone wird Klebstoff gezogen, der sich in die Aussparungen drückt. Überschüssiger Klebstoff wird abgezogen. Im Anschluss wird die Schablone abgehoben, wobei die Stege auf der Platte ausgebildet bleiben.

## Patentansprüche

1. Solarkollektorgehäuse (2), insbesondere für einen vollflächig durchströmbaren Solarflachkollektor, umfassend ein oberes Gehäuseteil (1 a), und ein unteres Gehäuseteil (1b), wobei die Gehäuseteile (1) über Stege (4) miteinander verbunden sind, sodass zwischen den beiden Gehäuseteilen (1) ein durchströmbarer Hohlraum (3) gebildet ist,
**dadurch gekennzeichnet, dass** mindestens einer der Stege (4) als standfester Klebstoff ausgebildet ist, um die Gehäuseteile (1) miteinander abdichtend stoffschlüssig unter Bildung eines Wandungsteils zu verbinden.

2. Solarkollektorgehäuse (2) nach Anspruch 1,
**dadurch gekennzeichnet, dass** die Stege (4) mindestens einen Randsteg (4a) umfassen, um die Gehäuseteile (1) und somit den Hohlraum (3) randseitig abdichtend zu begrenzen.

3. Solarkollektorgehäuse (2) nach Anspruch 1 oder 2, **dadurch gekennzeichnet,**
**dass** der Randsteg (4a) teilweise integriert mit mindestens einem Gehäuseteil (1a, 1b) ausgebildet ist.

4. Solarkollektorgehäuse (2) nach einem der Ansprüche 1 bis 3,
**dadurch gekennzeichnet, dass** die Stege (4) Kanalstege (4b) umfassen, die in dem von den Randstegen (4a) begrenzten Hohlraum (3) angeordnet sind und Fluidkanäle (5) bilden.

5. Solarkollektorgehäuse (2) nach einem der Ansprüche 1 bis 4,
**dadurch gekennzeichnet, dass** der standfeste Klebstoff Abstandshaltemittel (6) aufweist, um auch unter Belastung einen geeigneten Abstand zwischen den Gehäuseteilen (1) zu gewährleisten.

6. Solarkollektorgehäuse (2) nach einem der Ansprüche 1 bis 4,
**dadurch gekennzeichnet, dass** die Gehäuseteile (1) im Wesentlichen als korrespondierende Platten und/oder Folien ausgebildet sind.

7. Solarkollektor, insbesondere ein vollflächig durchströmbarer Solarflachkollektor, umfassend mindestens ein Solarkollektorgehäuse (2) nach einem der Ansprüche 1 bis 6.

8. Verfahren zur Herstellung eines Solarkollektorgehäuses (2), insbesondere für einen vollflächig durchströmbaren Solarflachkollektor, umfassend die Schritte:
sandwichartiges Anbringen von Stegen (4) zwischen einem oberen Gehäuseteil (1a) und einem unteren Gehäuseteil (1b) und Verbinden zumindest der Gehäuseteile (1) unter Bildung eines Hohlraums (3), der zumindest teilweise durch die Stege (4) begrenzt wird,
**dadurch gekennzeichnet, dass** das Anbringen von Stegen (4) mittels Auftragen eines standfesten Klebstoffs erfolgt, um die Gehäuseteile (1) miteinander abdichtend stoffschlüssig unter Bildung eines Wandungsteils zu verbinden.

9. Verfahren nach Anspruch 8,
**dadurch gekennzeichnet, dass** der Schritt Auftragen den Schritt umfasst: Auftragen des Klebstoffs mittels eines Druck- und/oder Maskenprozesses, um geeignete reproduzierbare Strömungsmittel zu bilden.

10. Verwendung eines vorzugsweise standfesten Klebstoffs zum beabstandeten Verbinden von mindestens zwei Gehäuseteilen (1) zu einem Solarkollektorgehäuse (2).
